Europäisches Patentamt

European Patent Office

Office européen des brevets

(19)

(11) **EP 0 939 552 A2**

(12) **EUROPEAN PATENT APPLICATION**

(43) Date of publication:
**01.09.1999 Bulletin 1999/35**

(51) Int. Cl.$^6$: **H04N 7/167**, H04N 5/913

(21) Application number: **99103455.4**

(22) Date of filing: **23.02.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **27.02.1998 JP 4798398**

(71) Applicant:
**KABUSHIKI KAISHA TOSHIBA
Kawasaki-shi Kanagawa-ken Tokyo (JP)**

(72) Inventor: **Nakamura, Shinichi
Sagamihara-shi, Kanagawa-ken (JP)**

(74) Representative:
**Henkel, Feiler, Hänzel
Möhlstrasse 37
81675 München (DE)**

(54) **Scrambler, descrambler and recording medium**

(57) A scrambler(1) includes a PN1$_n$ selector(3) for selecting one pseudo-random signal PN1$_n$ from a predetermined plurality of pseudo-random signals based on an input scramble key **n**, a spectrum shaper(5) for shaping the spectrum of the selected pseudo-random signal PN1$_n$, an adder(7) for adding the spectrum-shaped PN1$_n$ to an audio signal, a PN2$_n$ generator(9) for generating a pseudo-random signal PN2$_n$ based on the scramble key **n**, and a scrambling circuit(11) for scrambling the audio signal based on the pseudo-random signal PN2$_n$. A descrambler(31) includes a PN1$_n$ detector(33) for detecting PN1$_n$ embedded into the audio signal and for outputting the scramble key **n**, a PN2$_n$ generator(35) for generating the pseudo-random signal PN2$_n$ based on the scramble key **n**, and a descrambling circuit(37) for descrambling the audio signal based on the pseudo-random signal PN2$_n$.

FIG. 2A

**Description**

BACKGROUND OF THE INVENTION

1. Technical Field of the Invention

The present invention relates to a scrambler and a descrambler for protecting a copyright of the contents of audio or video information or the like suitable for use in cable/radio signal distribution systems, disk recording/reproducing systems, DVD apparatuses, etc., and a recording medium for recording scrambled signals thereon.

2. Description of Prior Art

Along with the progress of digital technology in recent years, there have been widely diffused CD's, DVD's and digital VTR's recorded with audio and/or video signals. Since digital transmission and digital recording technologies have excellent characteristics that digital information is transmitted or recorded in high quality, that information error can be corrected automatically and that there involves no deterioration in the quality of the information, it has been desired to protect a copyright of the contents of the information and to permit disclosing of the information by attaching using-conditions thereto.

For this purpose, there exists a scrambling technique for hiding the contents of the information against unjust or illegal listening to the contents or illegal use of data. In this technique, an audio signal or a video signal is shuffled for each bit or for each sample by using a pseudo-random signal, or a random signal is applied to the audio or video signal to scramble the signal, to thereby hide this signal or convert this signal into a noise signal.

This pseudo-random signal is a signal having statistical characteristics similar to a random signal, and is generated by means of a generation method which is mathematically or theoretically recursive, based on scramble key data. For the purpose of descrambling data scrambled by the pseudo-random signal, the scramble key data is transmitted or recorded by being sufficiently protected in a hidden state in a recording format, together with an audio or video signal. At the signal receiving side or the reproducing side, only an authenticated apparatus can decode the scramble key to descramble the scrambled signal.

If an apparatus not authenticated tries to reproduce the signal, the signal cannot be descrambled, and only a noise signal or an extremely fowled signal is obtained. Therefore, it is possible to protect the contents of the transmitted or recorded signal.

It is preferable to keep a scramble key separate from scrambled data, from the standpoint of safety. However, this requires a provision of a transmission path for the key in addition to a data transmission path, which complicates a system structure. Therefore, in general, a scramble key and scrambled data are transmitted or recorded at the same time. In this case, some encryption is often conducted to hide the key as far as possible.

In the case where scrambled data and a key for descrambling the data are transmitted or recorded together at the same time as described above, there exists a difficulty in that it is easy to separate the scrambled data from the scramble key in the format so that the key can be easily stolen by an attacker.

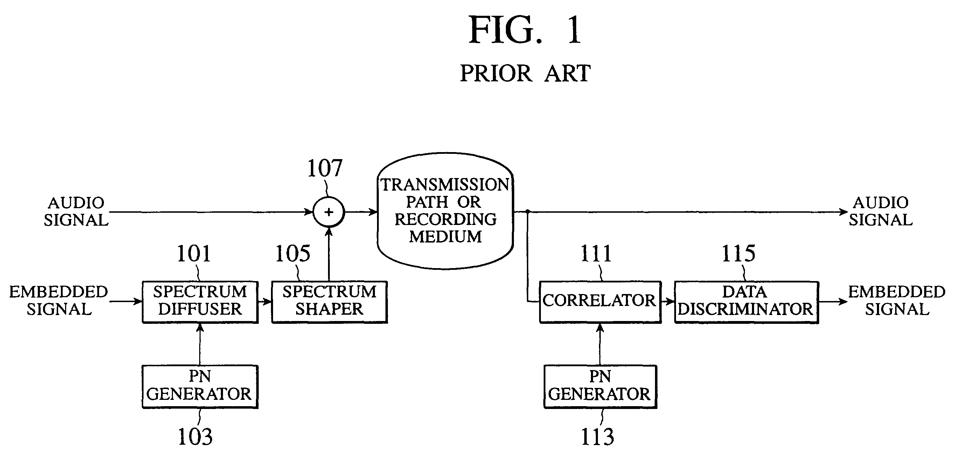

In the mean time, there is available a watermarking technique for use in embedding into a signal a copy protection flag (CGMS) for protecting a copyright. The watermarking technique is also called a digital watermarking technique. A prior-art example of the application of the watermarking technique to an audio signal will be explained below with reference to Fig.1.

Information to be embedded into an audio signal is diffused into an audio signal spectrum by a spectrum diffuser 101. The spectrum is shaped by a shaper 105 for utilizing auditory characteristics, and the shaped signal and the audio signal are added together by an adder 107. The spectrum diffusion is carried out, in short, by applying a pseudo-random signal generated by a PN generator 103 to the information to be embedded to make the information a noise signal diffused in a wide area. In adding a shaped signal to an audio signal, the shaped signal is always set at a level lower by a predetermined value than the level of the audio signal spectrum.

With the above-described arrangement, there arises almost no howling at the time of listening to the audio information due to a masking effect. For detecting the embedded information, a pseudo-random signal which is the same as the pseudo-random signal used for the embedding is generated by a PN generator 113. Then, a correlation coefficient between this pseudo-random signal and a received signal or a reproduced signal is calculated by a correlator 111, and data is discriminated by a data discriminator 115.

In the calculation of a correlation coefficient, an audio signal works as noise. Accordingly, in order to secure an S/N ratio having sufficient reliability, a sufficiently enough integration time is necessary. An example of an expression for obtaining a correlation coefficient is shown in (1) below.

$$Cor. = \sum_{n=0}^{N} A(n) \cdot P(n) \qquad (1)$$

where

    Cor.: a correlation coefficient,
    A(n): an audio signal, and
    P(n): a pseudo-random signal.

If, an embedding level is lower by 30dB than an audio signal level and if an S/N ratio of 20dB is necessary as a correlation coefficient, for example, a gain of 50 dB is necessary by integration. Accordingly, a value of N which satisfies an expression (2) below becomes N = 100,000. Thus, an audio signal is necessary by the number of 100,000 samples.

$$50 = 10 \log_{10} N \qquad (2)$$

A flag for indicating whether a pseudo-random signal exists or not has a size corresponding to one bit. Therefore, under the above embedding/detecting conditions, it requires at least two seconds to detect this one bit, assuming a sampling frequency is 48 kHz. In general, a CGMS flag for indicating a permission or non-permission of copying has two bits, and it has been considered to have no problem if it takes several tens of seconds for detecting this flag.

A CGMS flag embedded into a signal in this way in a transmitting apparatus or a recording apparatus needs not be transmitted by separate means, and the CGMS flag still exists in the form of an analog signal. Therefore, the CGMS flag transmission by this method can be controlled much more securely than the transmission according to the prior-art method.

However, generally, it takes long time for embedding key information of a few bits into data by the spectrum diffusion technique. In other words, there has been a problem that if it takes a few seconds to embed one-bit information as described above, it requires m times longer time to embed m-bit key data.

It may also be considered possible to embed a plurality of bits at the same time. However, a pseudo-random signal embedded at the same time becomes noise in an audio signal, which results in a substantial deterioration of sound quality.

SUMMARY OF THE INVENTION

In the light of the above-described problems, it is an object of the present invention to provide a scrambler and a descrambler capable of more safely transmitting a scramble key and also requiring no special transmission path for transmitting a scramble key.

More particularly, it is an object of the present invention to provide a scrambler that embeds a scramble key into data by a spectrum diffusion technique and scrambles the contents of an audio signal or a video signal by using the scramble key, and a descrambler that descrambles the contents of this signal.

It is another object of the present invention to provide a scrambler and a descrambler that can embed a few bits as a scramble key and that does not take a long time for embedding/detection of the scramble key.

It is still another object of the present invention to provide a recording medium having scrambled thereon the contents of an audio signal or a video signal by a scramble technique that is strong against an attack for obtaining a scramble key and that does not require a long time for detecting the scramble key.

In order to achieve the above objects, there is provided a scrambler, comprising: selecting means for selecting a first pseudo-random signal from a predetermined plurality of pseudo-random signals based on input key data; embedding means for embedding the first pseudo-random signal into an input data signal; pseudo-random signal generating means for generating a second pseudo-random signal based on the key data; and scrambling means for scrambling the input data signal by the second pseudo-random signal generated.

According to a preferred embodiment of the present invention, the embedding means embeds the first pseudo-random signal into the input data signal by means of spectrum diffusion.

Further, in order to achieve the above objects, there is provided a descrambler, comprising: pseudo-random signal detecting means for detecting, as a first pseudo-random signal, one pseudo-random signal from a predetermined plurality of pseudo-random signals, embedded into an input data signal; key data generator for generating key data which is information on the first pseudo-random signal; pseudo-random signal generating means for generating a second pseudo-random signal based on the key data; and descrambling means for descrambling the input data signal by the second pseudo-random signal generated.

According to a preferred embodiment of the present invention, the descrambler further comprises reference pseudo-random signal generating means for generating a plurality of reference pseudo-random signals, wherein the pseudo-random signal detecting means detects the first pseudo-random signal based on calculation of correlation coefficients between the plurality of reference pseudo-random signals generated by the reference pseudo-random signal generating means and the input data signal.

Further, in order to achieve the above objects, there is provided a recording medium having recorded thereon a data signal into which a first pseudo-random signal selected from a predetermined plurality of pseudo-random signals based on input key data has been embedded, said data signal also having been scrambled by a second pseudo-random signal generated based on the key data.

Further, according to the present invention, by further embedding into the data signal a predetermined third pseudo-random signal having a predetermined phase relationship with the phase of the first pseudo-random signal at the scrambler side, it is possible to detect at high speed the first pseudo-random signal at the descrambler side through a phase detection of the third pseudo-random signal.

The nature, principle and utility of the invention will become more apparent from the following detailed description when read in conjunction with the accompanying drawings.

BRIEF DESCRIPTION OF THE DRAWINGS

In the accompanying drawings:

Fig.1 is a schematic view for explaining embedding and detection according to a prior-art watermarking technique;
Figs.2A and 2B are a block diagram and a scramble conceptual view respectively for showing a principle of a scrambler and a descrambler relating to the present invention;
Fig.3A is a block diagram for showing a configuration of a scrambler and a descrambler in a first embodiment of the present invention;
Fig.3B is a conceptual view for showing embedding and scrambling in the scrambler in the first embodiment;
Fig.4 is a detailed block diagram for showing a key part of the scrambler according to the first embodiment;
Fig.5 is a flowchart for explaining an operation the descrambler according to the first embodiment;
Fig.6 is a flowchart for explaining an operation the descrambler according to the first embodiment;
Fig.7 is a view for explaining a flow of a processing time of the descrambler according to the first embodiment; and
Fig.8 is a conceptual view of embedding and scrambling in the scrambler and the descrambler according to a second embodiment of the present invention.

DESCRIPTION OF THE PREFERRED EMBODIMENTS

Embodiments of the present invention will be explained in detail below with reference to the accompanying drawings.

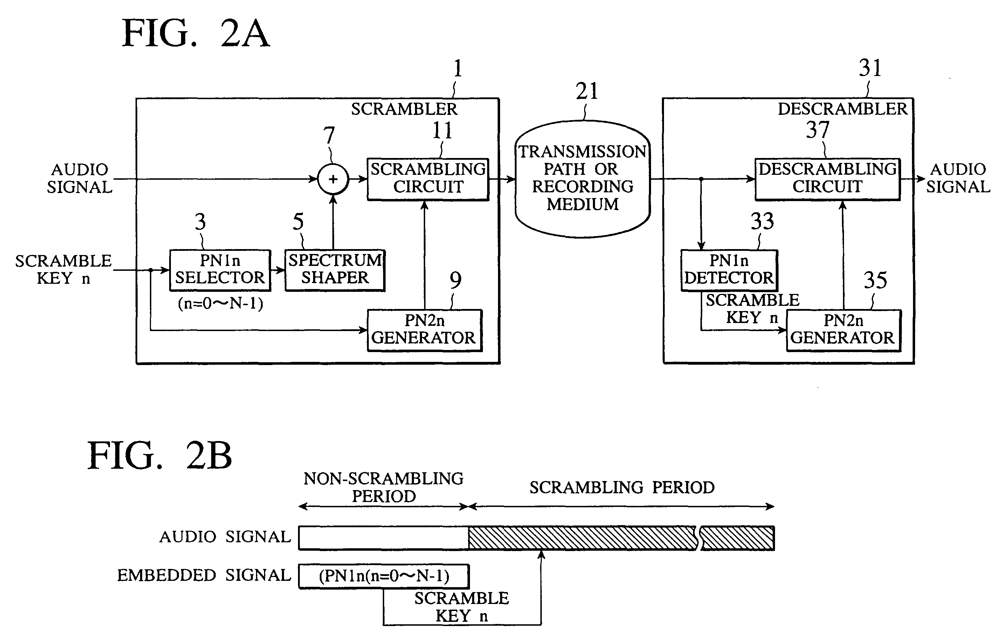

Figs.2A and 2B are a block diagram and a principle explanatory view respectively showing a schematic configuration of a scrambler and a descrambler for explaining the principle of the present invention. A digital audio signal (hereinafter, to be simply referred to as an audio signal) is explained as an example of the contents of a signal to be scrambled, but the contents are not limited to this.

Referring to Fig.2A, a scrambler 1 includes a $PN1_n$ selector 3 for selectively outputting a first pseudo-random signal $PN1_n$ from a predetermined plurality (N) of pseudo-random signals $PN1_0$ to $PN1_{N-1}$ according to a scramble key $n$ given from the outside, a spectrum shaper 5 for shaping the spectrum of $PN1_n$ at a level lower by a predetermined value the level of the spectrum of an audio signal, an adder 7 for adding an output of the spectrum shaper 5 to the audio signal, a $PN2_n$ generator 9 for generating a second pseudo-random signal $PN2_n$ based on the scramble key $n$, and a scrambling circuit 11 for scrambling the audio signal based on the $PN2_n$.

The audio signal into which $PN1_n$ has been embedded and which has been scrambled by the scrambler 1, is received or reproduced by a descrambler 31 through a transmission path or a recording medium shown by a reference number 21.

It is considered suitable to use a cable or radio transmission path or a broadcasting channel as the transmission path and a CD, or a DVD or a digital video tape or the like as the recording medium shown by the reference number 21.

The descrambler 31 includes a $PN1_n$ detector 33 for detecting the pseudo-random signal $PN1_n$ embedded into the audio signal and for outputting the scramble key $n$ corresponding to the detected pseudo-random signal, a $PN2_n$ generator 35 for generating the pseudo-random signal $PN2_n$ based on the scramble key $n$, and a descrambling circuit 37 for descrambling the audio signal based on $PN2_n$.

The principle of the embedding and scrambling will be explained next with reference to Figs. 2A and 2B. At first, an audio signal to be scrambled is divided into two parts; a non-scrambling period part at the header, having a few seconds, for example, and a scrambling period part after the non-scrambling. During a non-scrambling period, $PN1_n$ selected by the $PN1_n$ selector 3 and then spectrum-shaped by the spectrum shaper 5, is spectrum-diffused and is embedded into the audio signal by the adder 7.

During a scrambling period, the audio signal is scrambled by the scrambling circuit 11 based on $PN2_n$ generated by the $PN2_n$ generator based on the scramble key $n$. As a scrambling method to be used by the scrambling circuit 11, there may be employed a one which has been known conventionally. The method is not specifically limited, and it is possible to use, for example, a method for shuffling the audio signal for each bit or for each sample or for directly applying a pseudo-random signal to the audio signal.

In the descrambler 31 provided at the signal receiver side or a reproducer side, at first, the $PN1_n$ selector 33 detects $PN1_n$ embedded into the audio signal during the non-scrambling period of the audio signal, and the $PN2_n$ generator 35 generates $PN2_n$ based on the scramble key $n$ corresponding to $PN1_n$ output by the $PN1_n$ detector 33. Then, the descrambling circuit 37 descrambles the audio signal during the scrambling period part based on $PN2_n$.

[First embodiment]

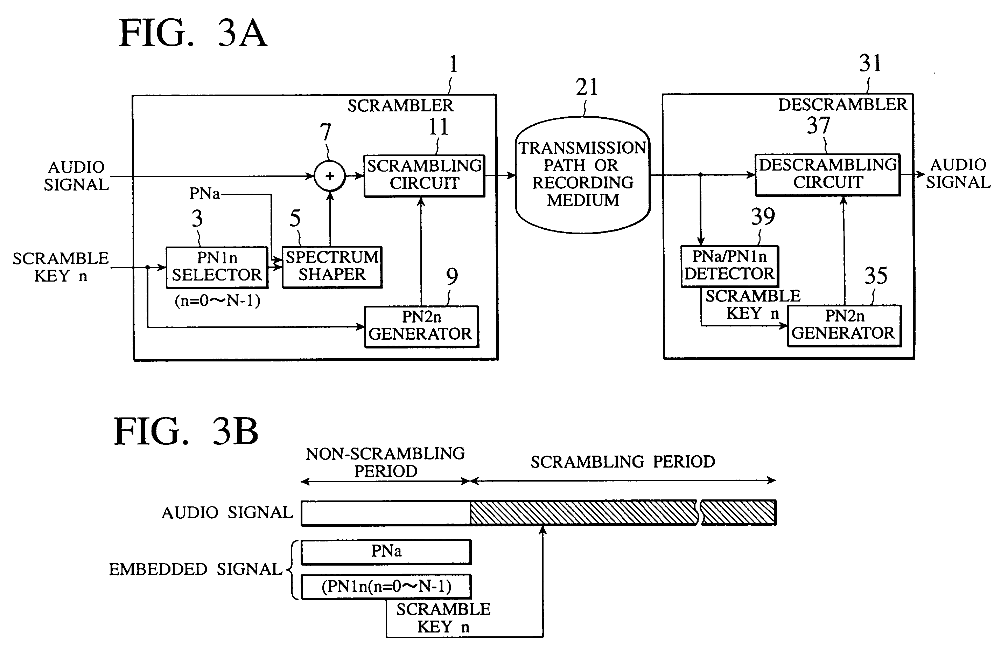

Fig.3A is a block diagram for showing a first embodiment of a scrambler and a descrambler relating to the present invention. Fig.3A is different from Fig.2A in that a fixed pseudo-random signal as a third pseudo-random signal is added to the input of the spectrum shaper 5 of the scrambler 1 and that the $PN1_n$ detector 33 of the descrambler 31 is replaced by a Pna/$PN1_n$ detector 39. All the other structures are the same.

Fig.3B is a conceptual view for showing embedding for carrying out scrambling and scrambling in the first embodiment of the invention. As shown in this drawing, there is provided a non-scrambling period part in the header of an audio signal, and the third pseudo-random signal PNa and the first pseudo-random signal $PN1_n$ are embedded into this part during the non-scrambling period. A scrambling period part following this non-scrambling period part is scrambled based on the scramble key $n$ shown by $PN1_n$.

The operation of the first embodiment will be explained next.

At first, the scrambler 1 embeds the third pseudo-random signal PNa and the first pseudo-random signal $PN1_n$ into the audio signal based on a spectrum diffusion technique.

The third pseudo-random signal PNa is a flag for indicating whether or not a scramble key has been embedded into the audio signal, and this is a predetermined fixed pseudo-random signal. On the other hand, the first pseudo-random signal $PN1_n$ is one pseudo-random signal $PN1_n$ selected by the $PN1_n$ selector 3 from a predetermined plurality (N) of pseudo-random signals $PN1_0$ to $PN1_{N-1}$.

In this case, the length of the third pseudo-random signal PNa is set equal to the length of the first pseudo-random signal $PN1_n$, or these lengths are set in a certain integer ratio. Further, in embedding these pseudo-random signals, the phases of PNa and $PN1_n$ are set the same or are set to have a predetermined phase relationship.

To each of the predetermined N pseudo-random signals $PN1_0$ to $PN1_{N-1}$, N scramble keys 0 to N-1 are set to correspond in one to one relationship. For example, a scramble key $n$, as one of these scramble keys, corresponds to $PN1_n$. This indirectly means that the selecting of one pseudo-random signal $PN1_n$ from the N pseudo-random signals $PN1_0$ to $PN1_{N-1}$ and embedding this signal as the first pseudo-random signal into data for transmission or for recording is to embed the scramble key $n$ corresponding to $PN1_n$ for transmission or for recording.

Then, the audio signal after the embedded period is scrambled by this scramble key $n$. There are various methods of scrambling. For example, there is used the scrambling circuit 11 for making the $PN2_n$ generator generate a second pseudo-random signal $PN2_n$ based on the scramble key $n$ to shuffle the audio signal by this pseudo-random signal $PN2_n$, or to scramble the audio signal by this pseudo-random signal $PN2_n$.

The audio signal becomes a noise signal by the scrambling, and it is difficult to listen to this audio signal unless this is descrambled. Thus, the contents of the audio signal can be hidden. The scrambled audio signal embedded with the scramble key is recorded onto a recording medium or is transmitted through a transmission path.

In the descrambler 31, the scramble key $n$ embedded into the audio signal is detected at first. For detecting the scramble key $n$, at first, there is detected the fixed pseudo-random signal PNa as the third pseudo-random signal for showing whether a scramble key has been embedded or not. The audio signal and assumed PNa are correlated to detect the fixed pseudo-random signal PNa.

Since PNa has been embedded at a level lower than the audio signal level, it is necessary to integrate over a sufficiently long time in order to carry out a satisfactory and reliable detection. It usually takes a few seconds for this. Further, it is also necessary to detect the phase of the embedded PNa since this phase is not known. For this purpose, correlation coefficients of all the conceivable potential phases are detected, and a phase with the highest correlation coefficient is established as the phase of PNa.

Once the phase of PNa has been established, $PN1_n$ is detected. In this case, when the phase of PNa is known, the phase of $PN1_n$ is also known based on the conditions set at the time of the embedding. Therefore, in the detection

of $PN1_n$, a processing for phase establishment is not necessary. However, since **n** of $PN1_n$ is unknown, it is necessary to correlate each of the potential N pseudo-random signals $PN1_0$ to $PN1_{N-1}$. When the length of PN1 is expressed as M, and if M is equal to or larger than N, it is possible to detect $PN1_n$ in a sufficiently shorter period than to detect PNa. In fact, if the scramble key has a length of 8 bits, then N is equal to 256.

In the mean time, for the length M of PNa and $PN1_n$, it is necessary to take a sufficiently large value at which these pseudo-random signals can be separated with sufficiently high reliability from the audio signal into which they have been embedded. Accordingly, it is necessary to select the length of M at as large value as possible which makes it possible to sufficiently lower error probabilities of making an erroneous decision that the audio signal is PN. On the other hand, since the number of phases increases, the phase detecting time increases. By taking a balance between the error probabilities and the phase detecting time, the value of M is taken at a level of at least a few thousands.

Accordingly, the relationship of M » N can be met sufficiently. As explained above, PNa is used as a flag for discriminating whether there exists a scrambling or not and is also used for a synchronous detection of the scramble key **n**, and thus $PN1_n$ is used as information carrier of the scramble key **n**.

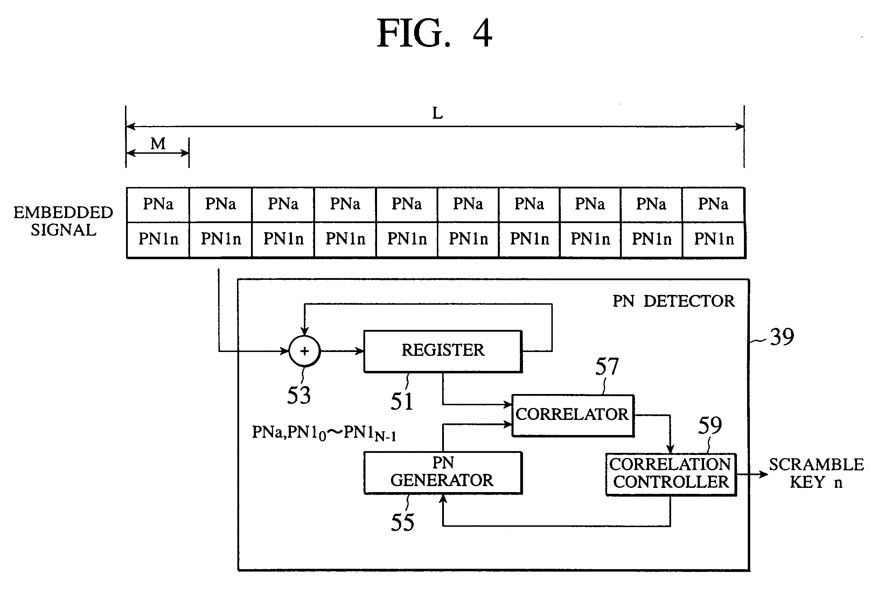

Fig.4 is a detailed block diagram of the $PNa/PN1_n$ detector 39 for explaining a more detailed scramble key detection. In this diagram, the $PNa/PN1_n$ detector (hereinafter to be called a PN detector) 39 includes a register 51 structured by shift registers of the length M, an adder 53 for adding an input signal and an output of the register 51 together and outputting the sum to the register 51, a PN generator 55 for generating PNa and $PN1_0$ to $PN1_{N-1}$. a correlator 57 for calculating a correlation between an output of the register 51 and an output of the PN generator 55, and a correlation controller 59 for carrying out an overall control of the PN detector 39 and a control of PN generated by the PN generator 55.

In detecting a pseudo-random signal embedded into a transmitted or recorded signal, it is necessary to obtain correlations of all the potential phases if the phase of the pseudo-random signal is not known. Therefore, the length of the pseudo-random signal is preferably as small as possible. On the other hand, the pseudo-random signal to be embedded needs to have a sufficiently large length in order to carry out a calculation for obtaining a correlation over such a long time as a few seconds. Therefore, a pseudo-random signal of a constant length (M) is repeated in actual practice.

In the detection, the signal is once convoluted in the length of M before carrying out a phase detection, by utilizing the periodicity of the pseudo-random signal, and the convoluted signal is stored in the register 51 having the length M. At this time, the level of the embedded signal is reinforced by the periodicity relative to the audio signal. The phase detection is carried out for M sample signals stored in the register 51. M samples A(m) are read out sequentially from the register 51, and pseudo-random signals P(m) to be detected are output sequentially from the PN generator 55. Then, basically, a correlation coefficient Cor. shown in the following expression (3) is obtained.

$$Cor. = \sum_{m=0}^{M-1} A(m) \cdot B(m) \qquad (3)$$

After the convolution, the pseudo-random signal PNa is detected. However, since the phase is not known yet, it is necessary to obtain correlations of all of M phases corresponding to the length M. Therefore, an expression (4), in which the phases of any one of A(m) and P(m) are shifted (A (m) in this case), is carried out.

$$Cor.(k) = \sum_{m=0}^{M-1} A(m+k) \cdot P(m) \qquad (k=0,1,\cdots,M-1) \qquad (4)$$

In the above expression, A(m+k) means to read the samples by shifting the calling from the register 51 by **k** samples. Cor.(k) having the highest correlation coefficient among Cor.(k) (k = 0 to M-1) is obtained. If the obtained correlation coefficient is the one which is sufficiently reliable to indicate that there exists a pseudo-random signal, there actually exists the pseudo-random signal to be obtained, and **k** denotes a phase of this pseudo-random signal. Thus, the existence of PNa is confirmed and the phase k thereof is detected.

Next, $PN1_n$ is detected. In the register 51, both PNa and $PN1_n$ are stored together in convolution. Therefore, correlation coefficients are obtained again between the signal called from the register 51 and the N pseudo-random signals $PN1_j$ (j = 0 to N-1). Since the phase **k** of PNa is known already, **k** is fixed, and the PN generator 55 generates $PN1_j$. Thus, correlation coefficients are obtained by the following expression (5).

$$Cor.(j)= \sum_{m=0}^{M-1} A(m+k) \cdot P_j(m) \qquad j=0,1,\cdots,N-1 \qquad (5)$$

$PN1_j$ (j = 0 to N-1) are generated sequentially based on the above expression, and respective correlation coefficients Cor.(j) are obtained. Since **j** which makes a correlation coefficient Cor.(j) maximum is equal to **n**, the embedded $PN1_n$ can be detected. The decision of a correlation coefficient, the control of the PN generator 55 and the calling from the register 51 are all controlled by the correlation controller 59.

Based on the above-described operation, **n** is output as a result of the detection. This **n** can be used directly as a scramble key, or it is also possible to obtain a separate scramble key with some conversion based on this **n**, for increasing the level of secrecy.

The PN generator 55 must generate PNa and $PN1_0$ to $PN1_{N-1}$. These pseudo-random signals can be stored in advance in a memory or the like and are then called. However, since the PN series can be generated by calculation from short data (an initial value of the M series, for example) which becomes a seed, it is general that only short seed data is held by a required number.

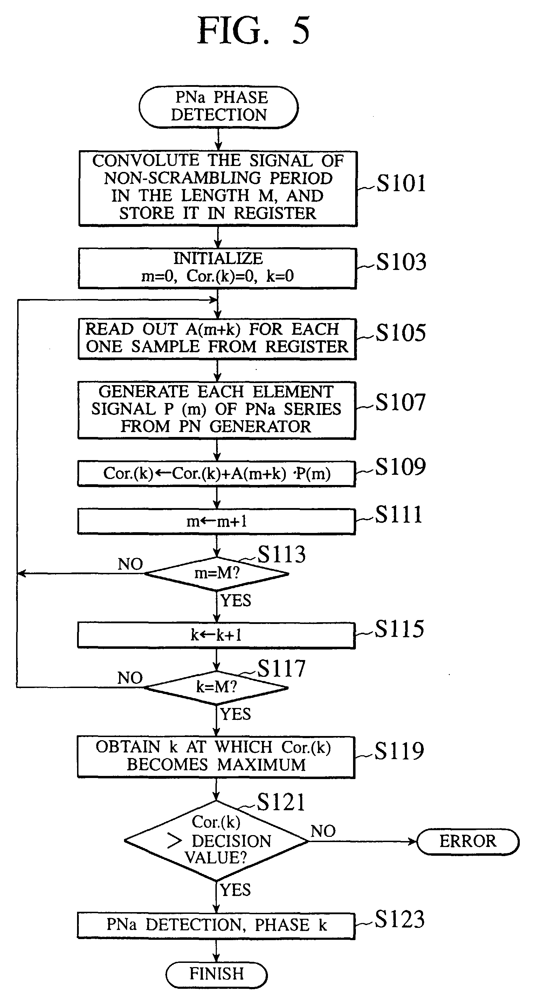

Fig.5 is a flowchart for explaining the operation of a phase detection. In Fig.5, at first, a reception signal or a reproduction signal during a non-scrambling period is added in circulation by shifting circularly the register 51 having the length M to carry out convolution. A result of the convolution is held in the register 51 (step S101).

Next, initialization is carried out for starting calculation. In this case, a read control parameter (digit) of the register is set **m**, a variable for obtaining the phase of PNa is set **k**, and a memory area for M correlation coefficients Cor.(k) (k = 0 to M-1) is set Cor.(k), and these are all set at an initial value of "0" (step S103).

Next, A(m+k) is read out for each one sample from the register 51 (step S105), and P(m) which is each element signal of the PNa is generated from the PN generator 39 (step S107). The steps S105 and S107 may be carried out at the same time or may be carried out in an opposite order so long as both values can be supplied to the next step S109.

Next, $Cor.(k)+A(m+k) \cdot P(m)$ is calculated, and a result is stored in Cor.(k) (step S109), the register read control parameter **m** is incremented by 1 (step S111), and a decision is made as to whether all the samples have been read out to the last sample (step S113). If the decision in the step S113 is NO, the operation is repeated from the step S105.

If the decision in the step S113 is YES, the calculation of the correlation coefficient Cor.(k) corresponding to the phase **k** has been finished, and **k** is incremented by 1 (step S115). Then, a decision is made as to whether **k** has reached M or not (step S117). If **k** is not equal to M, there is or are still other correlation coefficients to be obtained, and the process branches to step S105.

If **k** is equal to M, all the correlation coefficients have been obtained, and a maximum Cor.(k) and the value of this **k** are obtained from Cor.(0) to Cor.(M-1) (step S119). Then, a decision is made as to whether the obtained Cor.(k) is larger than a predetermined decision value (step S121). If this Cor.(k) does not exceed the predetermined decision value, the process branches to ERROR processing because some fault is considered to have occurred. In the ERROR processing, retrial may be carried out by a predetermined number.

If this Cor.(k) exceeds the predetermined decision value, PNa is detected correctly, and the phase of PNa is made firm as the **k** obtained in the step S119 (step S123), thus finishing the processing.

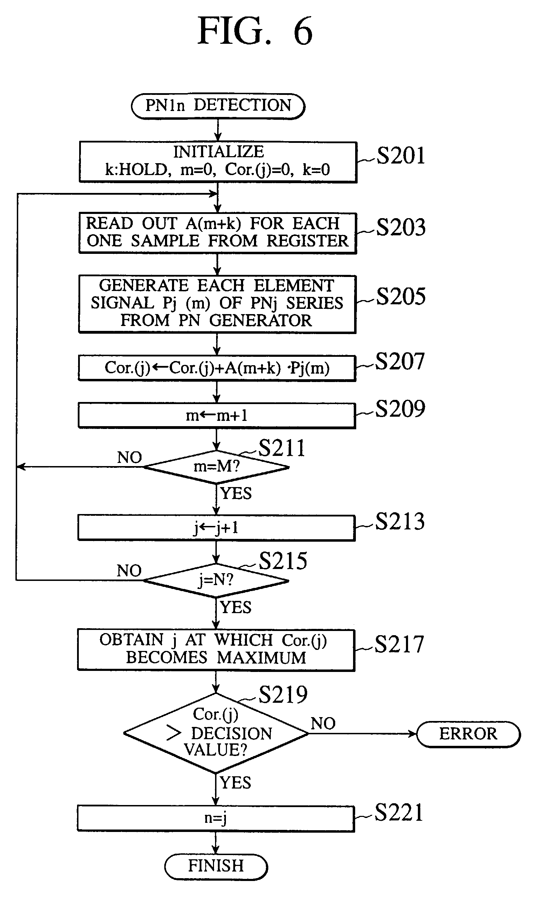

Fig.6 is a flowchart for explaining the operation for detecting $PN1_n$.

At first, values of m, (j) and j are initialized as m = 0, (j) = 0 (j = 0 to N-1), and j = 0, in the state that the value of **k** for showing the phase of PNa and the value of the register 51 are held (step S201). In this case, a convoluted signal remains in the contents of the register 51.

Next, A(m+k) is read for each one sample from the register 51 (step S203), and $P_j(m)$ which is each element signal of the pseudo-random signal $PN1_j$ is generated from the PN generator 39 (step S205). The steps S203 and S205 may be carried out at the same time or may be carried out in an opposite order so long as both values can be supplied to the next step S207.

Next, $Cor.(j) + A(m+k) \cdot P_j(m)$ is calculated, and a result is stored in Cor.(j) (step S207), the register read control parameter **m** is incremented by 1 (step S209), and a decision is made as to whether all the samples have been read out to the last sample (step S211). If the decision in the step S211 is NO, the operation is repeated from the step S203.

If the decision in the step S211 is YES, the calculation of the correlation coefficient Cor.(j) corresponding to $PN1_j$ has been finished, and **j** is incremented by 1 (step S213). Then, a decision is made as to whether **j** has reached N or not (step S215). If **j** is not equal to N, there still remains a calculation for obtaining correlation coefficients for other pseudo-random signal candidates, and the process branches to step S203.

If **j** is equal to N, all the correlation coefficients for the pseudo-random signal candidates have been obtained, and a maximum Cor.(j) and the value of this **j** are obtained from Cor.(0) to Cor.(N-1) (step S217). Then, a decision is made as to whether the obtained Cor.(j) is larger than a predetermined decision value (step S219). If this Cor.(j) does not exceed the predetermined decision value, the process branches to ERROR processing because some fault is considered to have occurred. In the ERROR processing, retrial may be carried out by a predetermined number.

If this Cor.(j) exceeds the predetermined decision value, $PN1_n$ is the pseudo-random signal to be obtained, and it is made firm that $PN1_n = PN1_j$, or the scramble key $n = j$ (step S221), thus finishing the processing.

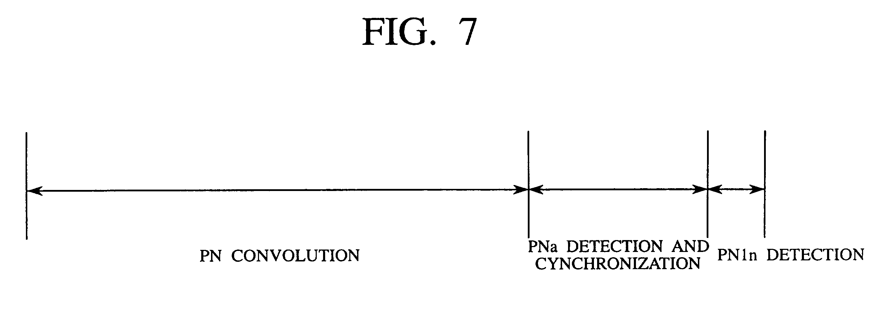

Fig.7 shows a time flow of the processing. At first, a convolution is carried out by utilizing the periodicity of a pseudo-random signal. For this operation, sufficient time, for example a few seconds (L samples), is necessary to enable an embedded signal to be separated from an audio signal. Next, the detection of PNa and the detection of phases, that is, a synchronous detection are carried out at the same time. If the length of the pseudo-random signal is M, M calculations are carried out to obtain M correlation coefficients. Synchronization is established at this time, and $PN1_n$ is detected next. At this stage, N calculations are carried out to obtain N correlation coefficients. In general, there is a relationship of L $\gg$ M $\gg$ N, and the detection time of a 1-bit embedded signal becomes (PN convolution + PNa phase detection) ≒ (PN convolution + PNa phase detection + $PN1_n$ detection). Therefore, it is possible to detect the scramble key $n$ ($0 \leq n \leq N-1$) during a detection time almost the same as the detection time of 1 bit embedded according to the conventional spectrum diffusion technique.

According to the above-described first embodiment, at the scrambler side, there are embedded simultaneously and in parallel into a signal to be processed, a predetermined third pseudo-random signal PNa and a first pseudo-random signal $PN1_n$ selected from a predetermined plurality of pseudo-random signals $PN1_0$ to $PN1_{N-1}$ which are in a predetermined phase relationship with PNa. Therefore, at the descrambler side, it is possible to detect easily the phase of the pseudo-random signal embedded by detecting a predetermined PNa, and it is also possible to detect easily $PN1_n$ based on a detected phase. Accordingly, the volume of calculation for detecting a pseudo-random signal at the descrambler side is small, with an effect that it is possible to reduce time required for obtaining a scramble key.

[Second embodiment]

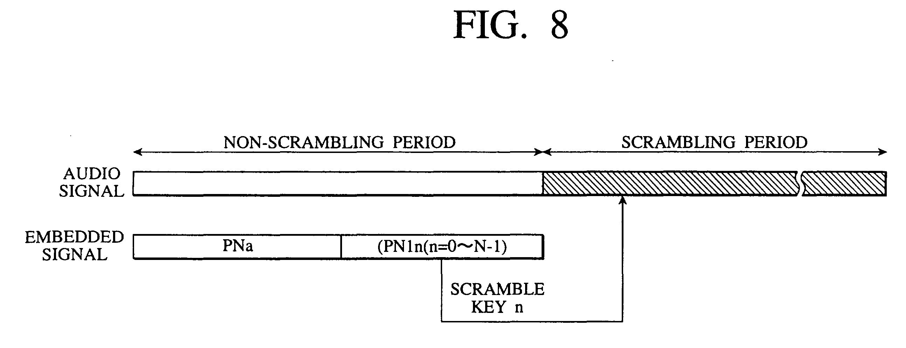

Fig.8 is a view for showing a concept of embedding and scrambling in a second embodiment of the present invention. A third pseudo-random signal PNa and a first pseudo-random signal $PN1_n$ are embedded sequentially into an audio signal according to a spectrum diffusion technique. The second embodiment is different from the first embodiment in that while PNa and $PN1_n$ are embedded at the same time in the first embodiment, $PN1_n$ is embedded after PNa has been embedded in the present embodiment. The structures of the scrambler and the descrambler of the second embodiment are similar to those of the block diagram shown in Fig.3A.

The third pseudo-random signal PNa is a flag for indicating whether or not a scramble key has been embedded into the audio signal, and this is a fixed pseudo-random signal. On the other hand, $PN1_n$ is one of signals selected from a plurality of pseudo-random signals $PN1_0$ to $PN1_{N-1}$.

In this case, in embedding these pseudo-random signals, the phases of PNa and $PN1_n$ are set the same or are set to have a predetermined phase relationship. To each of the pseudo-random signals $PN1_0$ to $PN1_{N-1}$, N scramble keys 0 to N-1 are set to correspond in one to one relationship. Accordingly, a scramble key $n$ corresponds to $PN1_n$.

The audio signal is scrambled by this scramble key $n$. There are various methods of scrambling. For example, there has been known a method for generating a second pseudo-random signal $PN2_n$ based on the scramble key $n$ to shuffle the audio signal by this pseudo-random signal $PN2_n$ or to scramble the audio signal by this pseudo-random signal $PN2_n$. The audio signal becomes a noise signal by the scrambling, and it is difficult to listen to this audio signal unless this is descrambled. Thus, it becomes possible to hide the contents of the audio signal. The scrambled audio signal embedded with the scramble key is recorded onto a recording medium or is transmitted through a transmission path.

In the descrambler 31, the scramble key embedded into the audio signal is detected at first. For detecting the scramble key, at first, there is detected the fixed pseudo-random signal PNa for showing whether a scramble key has been embedded or not. The audio signal and assumed PNa are correlated to detect the fixed pseudo-random signal PNa. Correlation calculation is carried for all the conceivable phases, and the phase having the highest correlation coefficient is established as the phase of PNa. Once the phase of PNa has been established, $PN1_n$ is detected next. If the phase of PNa is known, the phase of $PN1_n$ is also known based on the conditions at the time of the embedding. Therefore, it is not necessary to carry out a processing for establishing the phase of $PN1_n$ in detecting $PN1_n$. However, since n of $PN1_n$ is not known, it is necessary to carry out correlation for all the potential N pseudo-random signals of $PN1_0$ to $PN1_{N-1}$, and a most certain $PN1_n$ is specified.

According to the present embodiment, since PNa and $PN1_n$ are embedded sequentially, a longer period is required for the embedding than the period required in the first embodiment. However, since only one pseudo-random signal is embedded at any time, influence to the audio signal can be minimized. Further, howling of sound quality at the time of reproduction can be more reduced as compared with the first embodiment.

[Third embodiment]

A block diagram for showing the configuration of a third embodiment is the same as Fig.2A. In the present embodiment, a third pseudo-random signal PNa used in the first and second embodiments is not used. Instead, only $PN1_n$ selected from a plurality of pseudo-random signals $PN1_0$ to $PN1_{N-1}$ is embedded into an audio signal.

In this case, to each of N pseudo-random signals $PN1_0$ to $PN1_{N-1}$, N scramble keys 0 to N-1 are set to correspond in one to one relationship. Accordingly, a scramble key n corresponds to $PN1_n$. The scrambler 1 scrambles the audio signal with this scramble key **n**.

There are various methods of scrambling. For example, there has been known a method for generating a second pseudo-random signal $PN2_n$ based on the scramble key n to shuffle the audio signal by this pseudo-random signal $PN2_n$ or to scramble the audio signal by this pseudo-random signal $PN2_n$. The audio signal becomes a noise signal by the scrambling, and it is difficult to listen to this audio signal unless this is descrambled. It also becomes possible to hide the contents of the audio signal. The scrambled audio signal embedded with the scramble key is recorded onto a recording medium or is transmitted through a transmission path.

In the descrambler 31, it is necessary to check whether all the candidates of $PN1_n$ have been embedded or not. It is also necessary to check phases of all the candidates. Therefore, many calculations must be carried out for phase detection as compared with the first embodiment.

However, there is required only one pseudo-random signal to be embedded, and it becomes possible to minimize the influence of howling of the audio signal. Further, despite the fact that more time is required for detecting a scramble key, the period required for embedding the scramble key is the same as the period necessary for detecting one pseudo-random signal, which is the same as the first embodiment.

Description has been made of the embodiments in the above in which the present invention is applied to an audio signal. However, these do not limit the present invention. For example, the present invention can also be applied to a video signal as contents. The invention can be applied to both cases where the contents are transmitted through a cable/radio communication channel and where the contents are recorded onto a recording medium for distribution.

As explained above, according to the present invention, it is possible to provide a scrambler and a descrambler as well as a recording medium capable of embedding a scramble key into such contents as an audio signal or the like and capable of detecting this scramble key in a short time.

According to the present invention, only one or two pseudo-random signals are embedded, and there is an effect that the howling of the quality of the contents such as an audio signal or the like can be minimized.

In general, scrambling cannot be applied to a portion of the contents where a scramble key is embedded. Therefore, it is necessary to embed the scramble key during a short period as far as possible.

However, according to the present invention, the embedding of a scramble key having a few bits requires an embedding period corresponding to only one bit based on the conventional spectrum diffusion technique. This reduces a non-scrambling period.

Further, the present invention does not require an area on a format for transmitting the scramble key, which simplifies the transmission path. Moreover, as the scramble key is also embedded into the contents of the signal, this scramble key is not exposed to the transmission path, which increases the security level of security thus ensuring safety.

It should be understood that many modifications and adaptations of the invention will become apparent to those skilled in the art and it is intended to encompass such obvious modifications and changes in the scope of the claims appended hereto.

**Claims**

1.  A scrambler(1), comprising:

    selecting means(3) for selecting a first pseudo-random signal ($PN1_n$) from a predetermined plurality of pseudo-random signals based on input key data(n);
    embedding means(7) for embedding the first pseudo-random signal($PN1_n$) into an input data signal;
    pseudo-random signal generating means(9) for generating a second pseudo-random signal($PN2_n$) based on the key data(n); and
    scrambling means(11) for scrambling the input data signal by the second pseudo-random signal($PN2_n$) generated.

2.  The scrambler(1) according to Claim 1, wherein the embedding means(7) embeds the first pseudo-random signal($PN1_n$) into the input data signal by means of spectrum diffusion.

3. A descrambler(31), comprising:

pseudo-random signal detecting means (33) for detecting, as a first pseudo-random signal($PN1_n$), one pseudo-random signal from a predetermined plurality of pseudo-random signals, embedded into an input data signal;
key data generator(33) for generating key data(n) which is information on the first pseudo-random signal($PN1_n$);
pseudo-random signal generating means(35) for generating a second pseudo-random signal($PN2_n$) based on the key data(n); and
descrambling means(37) for descrambling the input data signal by the second pseudo-random signal($PN2_n$) generated.

4. The descrambler(31) according to Claim 3, further comprising reference pseudo-random signal generating means(55) for generating a plurality of reference pseudo-random signals,
wherein the pseudo-random signal detecting means(33) detects the first pseudo-random signal($PN1_n$) based on calculation of correlation coefficients between the plurality of reference pseudo-random signals generated by the reference pseudo-random signal generating means(55) and the input data signal.

5. A recording medium having recorded thereon a data signal into which a first pseudo-random signal($PN1_n$) selected from a predetermined plurality of pseudo-random signals based on input key data(n) has been embedded, said data signal also having been scrambled by a second pseudo-random signal($PN2_n$) generated based on the key data(n).

6. A scrambler(1), comprising:

selecting means(3) for selecting a first pseudo-random signal($PN1_n$) from a predetermined plurality of pseudo-random signals based on input key data(n);
pseudo-random signal generating means(9) for generating a second pseudo-random signal($PN2_n$) based on the key data(n);
embedding means(7) for embedding into an input data signal the first pseudo-random signal($PN1_n$) and a predetermined third pseudo-random signal(PNa) having a predetermined phase relationship with a phase of the first pseudo-random signal($PN1_n$); and
scrambling means(11) for scrambling the input data signal by the second pseudo-random signal($PN2_n$) generated.

7. The scrambler(1) according to Claim 6, wherein the embedding means(7) embeds the first pseudo-random signal($PN1_n$) and the third pseudo-random signal(PNa) into the input data signal during the same period.

8. The scrambler(1) according to Claim 6, wherein the embedding means(7) embeds the first pseudo-random signal($PN1_n$) and the third pseudo-random signal(PNa) into the input data signal during different periods.

9. The scrambler(1) according to Claim 6, wherein the embedding means(7) embeds the first pseudo-random signal($PN1_n$) and the third pseudo-random signal(PNa) into the input data signal by means of spectrum diffusion.

10. A descrambler(31), comprising:

first detecting means(39) for detecting a predetermined third pseudo-random signal(PNa) embedded in advance into an input data signal and a phase of the third pseudo-random signal(PNa);
second detecting means(39) for detecting, as a first pseudo-random signal($PN1_n$), one pseudo-random signal from a predetermined plurality of pseudo-random signals, embedded into the input data signal, based on the phase of the third pseudo-random signal(PNa) detected;
key data generating means(39) for generating key data(n) which is information on the first pseudo-random signal($PN1_n$);
pseudo-random signal generating means(35) for generating a second pseudo-random signal($PN2_n$) based on the key data(n); and
descrambling means (37) for descrambling the input data signal by the second pseudo random signal($PN2_n$) generated.

**11.** The descrambler(31) according to Claim 10, further comprising reference pseudo-random signal generating means(55) for generating a plurality of reference pseudo-random signals,
wherein the first detecting means(39) and the second detecting means(39) detect respectively the third pseudo-random signal(PNa) and the phase thereof and the first pseudo-random signal($PN1_n$), based on calculation of correlation coefficients between the plurality of reference pseudo-random signals generated by the reference pseudo-random signal generating means(55) and the input data signal.

**12.** A recording medium having recorded thereon a data signal into which a first pseudo-random signal($PN1_n$) selected from a predetermined plurality of pseudo-random signals based on input key data(n) and a predetermined third pseudo-random signal(PNa) having a predetermined phase relationship with a phase of the first pseudo-random signal($PN1_n$) have been embedded, said data signal also having been scrambled by a second pseudo-random signal($PN2_n$) generated based on the key data(n).

# FIG. 1
## PRIOR ART

AUDIO SIGNAL

107

TRANSMISSION PATH OR RECORDING MEDIUM

AUDIO SIGNAL

EMBEDDED SIGNAL

101
SPECTRUM DIFFUSER

105
SPECTRUM SHAPER

111
CORRELATOR

115
DATA DISCRIMINATOR

EMBEDDED SIGNAL

103
PN GENERATOR

113
PN GENERATOR

EP 0 939 552 A2

# FIG. 2A

**SCRAMBLER 1**

AUDIO SIGNAL → (+) 7 → SCRAMBLING CIRCUIT 11 →

PN1n SELECTOR 3 (n=0~N-1)

SCRAMBLE KEY n → PN1n SELECTOR

SPECTRUM SHAPER 5

PN2n GENERATOR 9

**TRANSMISSION PATH OR RECORDING MEDIUM 21**

**DESCRAMBLER 31**

DESCRAMBLING CIRCUIT 37 → AUDIO SIGNAL

PN1n DETECTOR 33

SCRAMBLE KEY n

PN2n GENERATOR 35

# FIG. 2B

NON-SCRAMBLING PERIOD | SCRAMBLING PERIOD

AUDIO SIGNAL

EMBEDDED SIGNAL (PN1n(n=0~N-1)

SCRAMBLE KEY n

EP 0 939 552 A2

# FIG. 3A

# FIG. 3B

EP 0 939 552 A2

# FIG. 4

EMBEDDED SIGNAL

| PNa | PNa | PNa | PNa | PNa | PNa | PNa | PNa | PNa | PNa |
| PN1n | PN1n | PN1n | PN1n | PN1n | PN1n | PN1n | PN1n | PN1n | PN1n |

PN DETECTOR

~39

53

$+$

REGISTER

51

57

CORRELATOR

$PNa, PN1_0 \sim PN1_{N-1}$

59

PN GENERATOR

55

CORRELATION CONTROLLER

SCRAMBLE KEY n

EP 0 939 552 A2

# FIG. 5

$$\text{PNa PHASE DETECTION}$$

CONVOLUTE THE SIGNAL OF NON-SCRAMBLING PERIOD IN THE LENGTH M, AND STORE IT IN REGISTER — S101

INITIALIZE
$m=0$, Cor.$(k)=0$, $k=0$ — S103

READ OUT A$(m+k)$ FOR EACH ONE SAMPLE FROM REGISTER — S105

GENERATE EACH ELEMENT SIGNAL P $(m)$ OF PNa SERIES FROM PN GENERATOR — S107

Cor.$(k) \leftarrow$ Cor.$(k)+$A$(m+k)\cdot$P$(m)$ — S109

$m \leftarrow m+1$ — S111

S113
$m=M?$ — NO

YES

$k \leftarrow k+1$ — S115

S117
$k=M?$ — NO

YES

OBTAIN k AT WHICH Cor.$(k)$ BECOMES MAXIMUM — S119

S121
Cor.$(k)$ > DECISION VALUE? — NO → ERROR

YES

PNa DETECTION, PHASE k — S123

FINISH

# FIG. 6

```
        ( PN1n DETECTION )
                 │
                 ▼
   ┌─────────────────────────────┐
   │        INITIALIZE           │──── S201
   │ k:HOLD, m=0, Cor.(j)=0, k=0  │
   └─────────────────────────────┘
                 │
                 ▼
   ┌─────────────────────────────┐
   │ READ OUT A(m+k) FOR EACH    │──── S203
   │ ONE SAMPLE FROM REGISTER    │
   └─────────────────────────────┘
                 │
                 ▼
   ┌─────────────────────────────┐
   │ GENERATE EACH ELEMENT       │
   │ SIGNAL Pj (m) OF PNj SERIES │──── S205
   │ FROM PN GENERATOR           │
   └─────────────────────────────┘
                 │
                 ▼
   ┌─────────────────────────────┐
   │ Cor.(j)←Cor.(j)+A(m+k) ·Pj(m)│──── S207
   └─────────────────────────────┘
                 │
                 ▼
   ┌─────────────────────────────┐
   │           m←m+1             │──── S209
   └─────────────────────────────┘
                 │
                 ▼
   NO          ╱ S211
◄───────────◄  m=M? ╲
              ╲     ╱
               YES
                 │
                 ▼
   ┌─────────────────────────────┐
   │           j←j+1             │──── S213
   └─────────────────────────────┘
                 │
                 ▼
   NO          ╱ S215
◄───────────◄  j=N? ╲
              ╲     ╱
               YES
                 │
                 ▼
   ┌─────────────────────────────┐
   │ OBTAIN j AT WHICH Cor.(j)   │──── S217
   │ BECOMES MAXIMUM             │
   └─────────────────────────────┘
                 │
                 ▼
            ╱  S219  ╲
           ╱ Cor.(j)  ╲   NO
          ╱ > DECISION  ╲─────────► ( ERROR )
           ╲  VALUE?    ╱
            ╲          ╱
               YES
                 │
                 ▼
   ┌─────────────────────────────┐
   │            n=j              │──── S221
   └─────────────────────────────┘
                 │
                 ▼
            ( FINISH )
```

# FIG. 7

PN CONVOLUTION

PNa DETECTION AND PN1n DETECTION
CYNCHRONIZATION

# FIG. 8

NON-SCRAMBLING PERIOD | SCRAMBLING PERIOD

AUDIO SIGNAL

EMBEDDED SIGNAL | PNa | (PN1n(n=0~N-1)

SCRAMBLE KEY n

EP 0 939 552 A2